# EUROPEAN PATENT APPLICATION

(11) **EP 4 653 913 A1**
(43) Date of publication of application: **26.11.2025**
(21) Application number: 23921673.2
(22) Date of filing: 14.02.2023
(51) Int. Cl.: G01S 7/487, G01S 7/481, G01S 17/89, G01S 7/4865

(54) **EMITTING METHOD, CONTROL METHOD AND CORRESPONDING APPARATUS**

(71) Applicant: Shenzhen Yinwang Intelligent Technologies Co., Ltd., Shenzhen, Guangdong 518110 (CN)
(72) Inventor: YUE, Chaolei, Shenzhen, Guangdong 518129 (CN); SHI, Xianling, Shenzhen, Guangdong 518129 (CN); CAO, Guoliang, Shenzhen, Guangdong 518129 (CN)
(74) Representative: Gill Jennings & Every LLP
(86) International application number: PCT/CN2023/075798
(87) International publication number: WO 2024/168500

(57) **Abstract**

A transmission method, a control method, and a corresponding apparatus are provided. A lidar determines a first light spot, where a position of the first light spot is determined based on a position of a high-reflectivity area (S301); and emits the first light spot (S302), where the first light spot includes a first area and a second area, the first area is a lighting area, the first area is located on a first straight line, the first straight line overlaps the high-reflectivity area, and the first area is located outside the high-reflectivity area; and the second area is a non-lighting area, the second area is located on the first straight line, and the second area overlaps the high-reflectivity area; or the second area is a lighting area, the second area is located on a second straight line, the second straight line overlaps the high-reflectivity area, and the second area overlaps the high-reflectivity area, where the second straight line does not overlap the first straight line, and/or a lighting time of the second area is different from a lighting time of the first area. In this solution, a crosstalk problem of the lidar can be alleviated, and implementation difficulty and design costs can be reduced.

## Description

### TECHNICAL FIELD

This application relates to the field of detection technologies, and in particular, to a transmission method, a control method, and a corresponding apparatus.

### BACKGROUND

With development of information technologies, detection technologies develop rapidly, and various detection apparatuses bring great convenience to people's life and travel. For example, an advanced driver assistance system (advanced driving assistance system, ADAS) plays a very important role in an intelligent vehicle. The advanced driver assistance system uses a detection apparatus mounted on the vehicle to detect an ambient environment, collect data, identify static or moving objects, and the like in a traveling process of the vehicle and perform systematic calculation and analysis based on map data of a navigator, so that a driver is aware of potential hazards in advance, and driving comfort and safety of the vehicle are effectively improved. The detection apparatus may be considered as an "eye" for sensing an environment, and includes a vision system sensor like a camera, and radar system sensors such as a millimeter-wave radar, a lidar, and an ultrasonic radar.

The lidar (light detection and ranging, Lidar, or referred to as a light detection and ranging apparatus) has advantages of high resolution, good detection performance, and strong concealment, and is one of important detection apparatuses in the sensing field. The lidar is a technology for transmitting a detection signal and obtaining related information of a target (for example, a feature quantity like a position, a shape, or a speed of the target) by receiving an echo reflected by the target.

Currently, the lidar has a crosstalk problem. In the conventional technology, methods such as additionally disposing a receiving detector to measure a crosstalk point, improving isolation between channels of the lidar, or identifying crosstalk noise through channel coding are used to filter out the crosstalk point. However, these methods have problems of high implementation difficulty and high costs.

### SUMMARY

Embodiments of this application provide a transmission method, a control method, and a corresponding apparatus, to alleviate a crosstalk problem of a lidar, improve accuracy of detecting a target by the lidar in an adjacent area of a high-reflectivity area, reduce implementation difficulty, and reduce design costs.

According to a first aspect, a transmission method is provided. The method may be applied to a lidar or some components in the lidar, for example, a transmitting module. For example, the method is applied to a lidar. The method includes: determining a first light spot, where a position of the first light spot is determined based on a position of a high-reflectivity area; and emitting the first light spot, where the first light spot includes a first area and a second area, and the first area is a lighting area. The first area is located on a first straight line, the first straight line overlaps the high-reflectivity area, and the first area is located outside the high-reflectivity area. The second area is a non-lighting area, the second area is located on the first straight line, and the second area overlaps the high-reflectivity area, or the second area is a lighting area, the second area is located on a second straight line, the second straight line overlaps the high-reflectivity area, the second area overlaps the high-reflectivity area, the second straight line does not overlap the first straight line, and/or a lighting time of the second area is different from a lighting time of the first area.

In the foregoing solution, the lidar determines the first light spot based on the position of the high-reflectivity area, to stagger the lighting time of the high-reflectivity area and a lighting time of an adjacent area of the high-reflectivity area. This can reduce or even avoid crosstalk caused by the high-reflectivity area to the adjacent area when the lidar detects the adjacent area, and help improve accuracy of detecting a target in the adjacent area by the lidar. In addition, in this solution, only a lighting policy of the transmitting module of the lidar needs to be changed. Compared with a method in which a receiving detector is additionally disposed to measure a crosstalk point, improve isolation between channels of the lidar, or identify crosstalk noise through channel coding, this solution can reduce implementation difficulty, and can reduce design costs.

In a possible design, the first area is a lighting area, and lighting is enabled on M transmitting channels corresponding to the first area. The second area is a non-lighting area, and lighting is disabled on N transmitting channels corresponding to the second area; or the second area is a lighting area, and lighting times of the N transmitting channels corresponding to the second area are different from lighting times of the M transmitting channels corresponding to the first area.

In this design manner, each channel of the transmitting module is controlled to be in a started-up or shut-down state, to emit the first light spot to the outside. This implementation is simple and reliable.

In a possible design, a reflected signal corresponding to the first light spot may be further received, and a real target is determined based on the reflected signal corresponding to the first light spot. For example, the lidar determines the real target (for example, determines a position of the real target) based on a reflection position of the reflected signal corresponding to the first light spot in the first area.

In this design manner, the lidar can accurately identify the real target in the adjacent area of the high-reflectivity area.

In a possible design, a second light spot may be further emitted. The second light spot includes a third area and a fourth area, both the third area and the fourth area are lighting areas, both the third area and the fourth area are located on a third straight line, and/or a lighting time of the third area is the same as a lighting time of the fourth area; and the third straight line overlaps the high-reflectivity area, the third area is located outside the high-reflectivity area, and the fourth area overlaps the high-reflectivity area.

In this design manner, a light spot different from the first light spot is emitted, to help the lidar determine a false target.

In a possible design, a reflected signal corresponding to the second light spot may be further received; and the false target is determined based on the reflected signal corresponding to the first light spot and the reflected signal corresponding to the second light spot.

For example, a target that returns a reflected signal in synchronization with that in the second area may be determined from the first area based on the reflected signal corresponding to the first light spot and the reflected signal corresponding to the second light spot. The target that returns the reflected signal in the first area in synchronization with that in the second area is the false target.

In this design manner, two different light spots are emitted and reflected signals of the two different light spots are compared, so that the false target and the real target in an adjacent area can be distinguished. This further improves accuracy of target identification.

It may be understood that, actually, there are not only two types of light spots, and more types of light spots may be emitted.

In a possible design, the first light spot may be emitted in a first time period, and the second light spot may be emitted in a second time period. The first time period and the second time period are two different times of flight.

In other words, the first light spot and the second light spot may be light spots emitted by a same transmitting channel of the lidar at different times.

In this design manner, hardware costs can be reduced.

In a possible design, a relative position of the lighting time of the first area in the first time period is the same as a relative position of the lighting time of the third area in the second time period.

In other words, lighting policies of parts of the first light spot and the second light spot outside the high-reflectivity area are the same.

In a possible design, the second area is a lighting area, and a relative position of the lighting time of the second area in the first time period is different from a relative position of the lighting time of the fourth area in the second time period.

In this way, lighting policies of parts of the first light spot and the second light spot in the high-reflectivity area can be different.

In a possible design, a third light spot may be further emitted, a reflected signal corresponding to the third light spot is received, and the position of the high-reflectivity area is determined based on the reflected signal corresponding to the third light spot; or indication information from a sensor or a controller is received, and the position of the high-reflectivity area is determined based on the indication information.

This design manner provides a plurality of manners of determining the position of the high-reflectivity area, thereby improving flexibility and reliability of the solution.

According to a second aspect, a control method is provided. The method includes: determining a first light spot, where a position of the first light spot is determined based on a position of a high-reflectivity area; and controlling a transmitting module to emit the first light spot, where the first light spot includes a first area and a second area, and the first area is a lighting area. The first area is located on a first straight line, the first straight line overlaps the high-reflectivity area, and the first area is located outside the high-reflectivity area. The second area is a non-lighting area, the second area is located on the first straight line, and the second area overlaps the high-reflectivity area, or the second area is a lighting area, the second area is located on a second straight line, the second straight line overlaps the high-reflectivity area, the second area overlaps the high-reflectivity area, the second straight line does not overlap the first straight line, and/or a lighting time of the second area is different from a lighting time of the first area.

In a possible design, the first area is a lighting area, and lighting is enabled on M transmitting channels corresponding to the first area. The second area is a non-lighting area, and lighting is disabled on N transmitting channels corresponding to the second area; or the second area is a lighting area, and lighting times of the N transmitting channels corresponding to the second area are different from lighting times of the M transmitting channels corresponding to the first area.

In a possible design, a receiving module may be further controlled to receive a reflected signal corresponding to the first light spot. It may be understood that, if a control apparatus and a processing apparatus may be integrated into one device for implementation, the control apparatus may further determine the real target based on the reflected signal corresponding to the first light spot. If the control apparatus and the processing apparatus are not implemented in a distributed manner, the processing apparatus determines the real target based on the reflected signal corresponding to the first light spot.

For ease of description, the following uses an example in which the control apparatus and the processing apparatus are integrated into one device for implementation.

In a possible design, the control apparatus may further determine the real target based on a reflection position of the reflected signal corresponding to the first light spot in the first area.

In a possible design, the control apparatus may further control the transmitting module to emit a second light spot. The second light spot includes a third area and a fourth area, both the third area and the fourth area are lighting areas, both the third area and the fourth area are located on a third straight line and/or a lighting time of the third area is the same as a lighting time of the fourth area; and the third straight line overlaps the high-reflectivity area, the third area is located outside the high-reflectivity area, and the fourth area overlaps the high-reflectivity area.

In a possible design, the control apparatus may further control the receiving module to receive a reflected signal corresponding to the second light spot, and may further determine a false target based on the reflected signal corresponding to the first light spot and the reflected signal corresponding to the second light spot.

In a possible design, the control apparatus may determine, from the first area based on the reflected signal corresponding to the first light spot and the reflected signal corresponding to the second light spot, a target that returns a reflected signal in synchronization with that in the second area, where the target that returns the reflected signal in the first area in synchronization with that in the second area is the false target.

In a possible design, the control apparatus may control the transmitting module to emit the first light spot in a first time period and emit the second light spot in a second time period, where the first time period and the second time period are two different times of flight ToFs.

In a possible design, a relative position of the lighting time of the first area in the first time period is the same as a relative position of the lighting time of the third area in the second time period.

In a possible design, the second area is a lighting area, and a relative position of the lighting time of the second area in the first time period is different from a relative position of the lighting time of the fourth area in the second time period.

In a possible design, the control apparatus may further control the transmitting module to transmit a third light spot; the control apparatus may control the receiving module to receive a reflected signal corresponding to the third light spot; and the control apparatus may further determine a position of the high-reflectivity area based on the reflected signal corresponding to the third light spot. Alternatively, the control apparatus may further control the receiving module to receive indication information from a sensor or a controller, and the control apparatus may further determine a position of the high-reflectivity area based on the indication information.

According to a third aspect, a transmitting apparatus is provided. The transmitting apparatus includes a determining module and a transmitting module. The determining module is configured to determine a first light spot, where a position of the first light spot is determined based on a position of a high-reflectivity area. The transmitting module is configured to emit the first light spot, where the first light spot includes a first area and a second area. The first area is a lighting area. The first area is located on a first straight line, the first straight line overlaps the high-reflectivity area, and the first area is located outside the high-reflectivity area. The second area is a non-lighting area, the second area is located on the first straight line, and the second area overlaps the high-reflectivity area. Alternatively, the second area is a lighting area, the second area is located on a second straight line, the second straight line overlaps the high-reflectivity area, the second area overlaps the high-reflectivity area, the second straight line does not overlap the first straight line, and/or a lighting time of the second area is different from a lighting time of the first area.

In a possible design, the first area is a lighting area, and lighting is enabled on M transmitting channels corresponding to the first area. The second area is a non-lighting area, and lighting is disabled on N transmitting channels corresponding to the second area; or the second area is a lighting area, and lighting times of the N transmitting channels corresponding to the second area are different from lighting times of the M transmitting channels corresponding to the first area.

In a possible design, the transmitting module is further configured to emit a second light spot. The second light spot includes a third area and a fourth area, both the third area and the fourth area are lighting areas, both the third area and the fourth area are located on a third straight line and/or a lighting time of the third area is the same as a lighting time of the fourth area; and the third straight line overlaps the high-reflectivity area, the third area is located outside the high-reflectivity area, and the fourth area overlaps the high-reflectivity area.

In a possible design, the transmitting module is configured to: emit the first light spot in a first time period; and emit the second light spot in a second time period, where the first time period and the second time period are two different times of flight ToFs.

In a possible design, a relative position of the lighting time of the first area in the first time period is the same as a relative position of the lighting time of the third area in the second time period.

In a possible design, the second area is a lighting area, and a relative position of the lighting time of the second area in the first time period is different from a relative position of the lighting time of the fourth area in the second time period.

In a possible design, the transmitting module is further configured to transmit a third light spot, where the third light spot is used to determine a position of the high-reflectivity area.

According to a fourth aspect, a receiving apparatus is provided, including: a receiving module, configured to receive a reflected signal corresponding to a first light spot; and a processing module, configured to determine a real target based on the reflected signal corresponding to the first light spot, where the first light spot includes a first area and a second area, and the first area is a lighting area; the first area is located on a first straight line, the first straight line overlaps the high-reflectivity area, and the first area is located outside the high-reflectivity area. The second area is a non-lighting area, the second area is located on the first straight line, and the second area overlaps the high-reflectivity area. Alternatively, the second area is a lighting area, the second area is located on a second straight line, the second area overlaps the high-reflectivity area, the second area overlaps the high-reflectivity area, the second straight line does not overlap the first straight line, and/or a lighting time of the second area is different from a lighting time of the first area.

In a possible design, the processing module is configured to determine the real target based on a reflection position of the reflected signal corresponding to the first light spot in the first area.

In a possible design, the receiving module is further configured to receive a reflected signal corresponding to a second light spot; and the processing module is further configured to determine a false target based on the reflected signal corresponding to the first light spot and the reflected signal corresponding to the second light spot. The second light spot includes a third area and a fourth area, both the third area and the fourth area are lighting areas, both the third area and the fourth area are located on a third straight line and/or a lighting time of the third area is the same as a lighting time of the fourth area; and the third straight line overlaps the high-reflectivity area, the third area is located outside the high-reflectivity area, and the fourth area overlaps the high-reflectivity area.

In a possible design, the processing apparatus is configured to determine, from the first area based on the reflected signal corresponding to the first light spot and the reflected signal corresponding to the second light spot, a target that returns a reflected signal in synchronization with that in the second area, where the target that returns the reflected signal in the first area in synchronization with that in the second area is the false target.

In a possible design, the receiving module is further configured to receive a reflected signal corresponding to the third light spot, and the processing module is further configured to determine a position of the high-reflectivity area based on the reflected signal corresponding to the third light spot. Alternatively, the processing module is further configured to determine a position of the high-reflectivity area based on indication information from a sensor or a controller.

According to a fifth aspect, a control apparatus is provided, including an apparatus, a module, or a technical means configured to perform the method in any one of the second aspect or the possible designs of the second aspect.

For example, the apparatus may include:
a determining module, configured to determine a first light spot, where a position of the first light spot is determined based on a position of a high-reflectivity area; and
a control module, configured to control a transmitting module to emit the first light spot, where
the first light spot includes a first area and a second area;
the first area is a lighting area, the first area is located on a first straight line, the first straight line overlaps the high-reflectivity area, and the first area is located outside the high-reflectivity area; and
the second area is a non-lighting area, the second area is located on the first straight line, and the second area overlaps the high-reflectivity area; or the second area is a lighting area, the second area is located on a second straight line, the second straight line overlaps the high-reflectivity area, and the second area overlaps the high-reflectivity area, where the second straight line does not overlap the first straight line, and/or a lighting time of the second area is different from a lighting time of the first area.

In a possible design, the first area is a lighting area, and lighting is enabled on M transmitting channels corresponding to the first area. The second area is a non-lighting area, and lighting is disabled on N transmitting channels corresponding to the second area; or the second area is a lighting area, and lighting times of the N transmitting channels corresponding to the second area are different from lighting times of the M transmitting channels corresponding to the first area.

In a possible design, the control module is further configured to control a receiving module to receive a reflected signal corresponding to the first light spot. It may be understood that, if a control apparatus and a processing apparatus may be integrated into one device for implementation, the control module may be further configured to determine a real target based on the reflected signal corresponding to the first light spot. If the control apparatus and the processing apparatus are not implemented in a distributed manner, the processing apparatus determines the real target based on the reflected signal corresponding to the first light spot.

For ease of description, the following uses an example in which the control apparatus and the processing apparatus may be integrated into one device for implementation.

In a possible design, the control module is further configured to determine the real target based on a reflection position of the reflected signal corresponding to the first light spot in the first area.

In a possible design, the control module is further configured to control the transmitting module to emit a second light spot. The second light spot includes a third area and a fourth area, both the third area and the fourth area are lighting areas, both the third area and the fourth area are located on a third straight line and/or a lighting time of the third area is the same as a lighting time of the fourth area; and the third straight line overlaps the high-reflectivity area, the third area is located outside the high-reflectivity area, and the fourth area overlaps the high-reflectivity area.

In a possible design, the control module is further configured to: control the receiving module to receive a reflected signal corresponding to the second light spot, and determine a false target based on the reflected signal corresponding to the first light spot and the reflected signal corresponding to the second light spot.

In a possible design, the control module is further configured to determine, from the first area based on the reflected signal corresponding to the first light spot and the reflected signal corresponding to the second light spot, a target that returns a reflected signal in synchronization with that in the second area, where the target that returns the reflected signal in the first area in synchronization with that in the second area is the false target.

In a possible design, the control module is configured to control the transmitting module to emit the first light spot in a first time period and emit the second light spot in a second time period, where the first time period and the second time period are two different times of flight ToFs.

In a possible design, a relative position of the lighting time of the first area in the first time period is the same as a relative position of the lighting time of the third area in the second time period.

In a possible design, the second area is a lighting area, and a relative position of the lighting time of the second area in the first time period is different from a relative position of the lighting time of the fourth area in the second time period.

In a possible design, the control module is further configured to: control the transmitting module to transmit a third light spot; control the receiving module to receive a reflected signal corresponding to the third light spot; and determine a position of the high-reflectivity area based on the reflected signal corresponding to the third light spot. Alternatively, the control apparatus is further configured to: control the receiving module to receive indication information from a sensor or a controller, and determine a position of the high-reflectivity area based on the indication information.

According to a sixth aspect, a terminal is provided, including at least one of the transmitting apparatus according to any one of the third aspect or the possible designs of the third aspect, the receiving apparatus according to any one of the fourth aspect or the possible designs of the fourth aspect, and the control apparatus according to any one of the fifth aspect or the possible designs of the fifth aspect. The terminal may be a vehicle, a drone, a helicopter, an airplane, a ship, an intelligent transportation device, a smart home device, or the like.

According to a seventh aspect, a computer-readable storage medium is provided, where the storage medium stores a computer program or instructions, and when the computer program or the instructions are executed by a communication apparatus, the method according to any one of the first aspect or the possible designs of the first aspect is implemented, or the method according to any one of the second aspect or the possible designs of the second aspect is implemented.

According to an eighth aspect, a computer program product is provided. When the computer program product runs on a processor, the method according to any one of the first aspect or the possible designs of the first aspect or the method according to any one of the second aspect or the possible designs of the second aspect is implemented.

For beneficial effects of the second aspect to the eighth aspect, specifically refer to technical effects that can be achieved by corresponding designs in the first aspect. Details are not described herein again.

### BRIEF DESCRIPTION OF DRAWINGS

FIG. 1A is a diagram of a lidar;
FIG. 1B is a diagram of an application scenario of a lidar according to an embodiment of this application;
FIG. 2 is an example diagram of a high-reflectivity area, a real target, and a false target;
FIG. 3 is a flowchart of a transmission method according to an embodiment of this application;
FIG. 4A and FIG. 4B are diagrams of a first light spot;
FIG. 5 is a diagram of a transmitting channel of a lidar;
FIG. 6A and FIG. 6B are diagrams of an emission time of a first light spot and a receiving time of a reflected signal;
FIG. 7A to FIG. 7C are diagrams of a first light spot and a second light spot;
FIG. 8A and FIG. 8B are diagrams of emission times of a first light spot and a second light spot and receiving times of reflected signals;
FIG. 9 is a flowchart of a transmission method according to an embodiment of this application;
FIG. 10A to FIG. 10D are diagrams of N groups of light spots;
FIG. 11 is a diagram of identifying a target based on N groups of light spots;
FIG. 12 is a diagram of a structure of a control apparatus according to an embodiment of this application;
FIG. 13 is a diagram of a structure of a transmitting apparatus according to an embodiment of this application; and
FIG. 14 is a diagram of a structure of a receiving apparatus according to an embodiment of this application.

### DESCRIPTION OF EMBODIMENTS

The technical solutions provided in embodiments of this application may be applied to a device having a laser detection capability, for example, a lidar, or a terminal device having a laser detection capability. The terminal device may be an intelligent device with a laser detection capability, and includes but is not limited to a smart home device, for example, a television, a robotic vacuum cleaner, a smart lamp, a speaker system, an intelligent lighting system, an electric appliance control system, home background music, a home theater system, an intercom system, and video surveillance, an intelligent transportation device, for example, a vehicle, a ship, an uncrewed aerial vehicle, a train, a van, a wagon, and a truck, and an intelligent manufacturing device, for example, a robot, an industrial device, intelligent logistics, and an intelligent factory. Alternatively, the terminal device may be a computer device with a laser detection capability, for example, a desktop computer, a personal computer, or a server. It should be further understood that the terminal device may alternatively be a portable electronic device with a laser detection capability, for example, a mobile phone, a tablet computer, a palmtop computer, a headset, an acoustic device, a wearable device (for example, a smartwatch), an in-vehicle device, a virtual reality device, or an augmented reality device.

The following uses a lidar as an example.

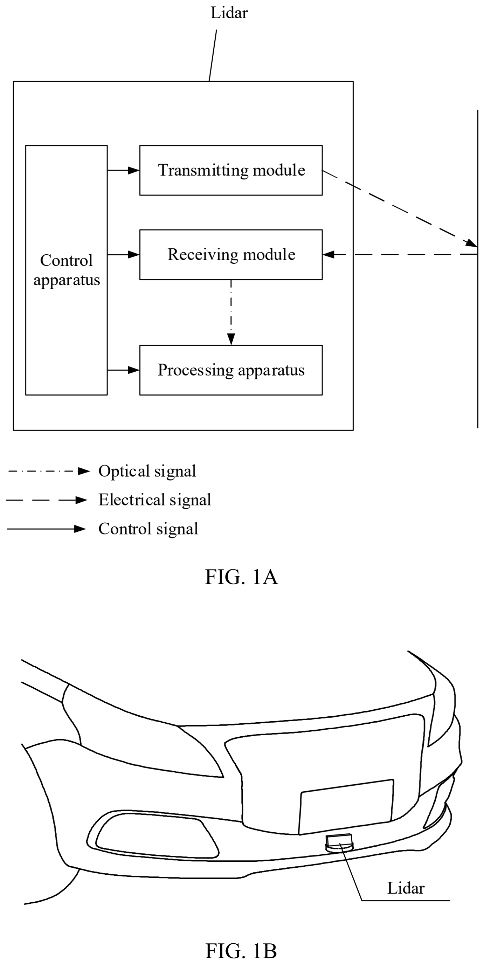

FIG. 1A is a diagram of a lidar. The lidar includes a transmitting module, a receiving module, a processing apparatus, and a control apparatus.
1. The transmitting module includes a laser and an emitting optical system. The laser is a device that can emit laser light, and a type of the laser may be any one of a semiconductor laser, a gas laser, a fiber laser, a solid-state laser, a dye laser, a diode laser, an excimer laser, or the like. The laser may send a detection signal (for example, pulse laser light or a frequency modulated continuous wave) under control of the control apparatus. The emitting optical system is a system including an optical element. The optical element includes but is not limited to one or more of a lens, a light filter, a polarizer, a mirror reflector, a beam splitter, a prism, a window sheet, a scattering sheet, or the like. The emitting optical system may transmit a detection signal from the laser. A form of the detection signal sent by the transmitting module may alternatively be a linear light spot, or may be a planar light spot. This is not limited in this application.

During specific implementation, the transmitting module may include a plurality of independent transmitting channels, and each transmitting channel may separately enable or disable lighting (that is, enable or disable transmission of a detection signal). A detection signal of each transmitting channel may be separately sent by one laser or a plurality of lasers, or detection signals of a plurality of transmitting channels may be sent by a same laser. This is not limited in this application.

Optionally, the lidar may further include a scanning mechanism. The scanning mechanism is configured to control an emergent direction of the detection signal, so that the detection signal can reach different areas, to scan and traverse an entire detection area (a target is located in the detection area).

2. The receiving module includes a detector and a receiving optical system. The receiving optical system is configured to receive a detection signal (namely, an echo signal or a reflected signal) returned from the outside, and converge the received echo signal to a photosensitive surface of the detector. The detector is configured to convert an echo signal from an optical signal into an electrical signal, and then transmit the electrical signal to the processing apparatus.

The receiving optical system may include one or more optical elements, a type of the optical element includes but is not limited to one or more of a lens, a light filter, a polarizer, a mirror reflector, a multi-faceted rotating mirror, a galvo mirror, a beam splitter, a prism, a window sheet, a scattering sheet, or the like.

The detector may be an array structure including a plurality of rows and a plurality of columns of pixels. The pixel is a minimum unit that is in the detector and that can receive an echo signal. Based on different forms of laser light of the transmitting module, the array structure of the detector may also have different forms, for example, a linear array structure or a planar array structure. Correspondingly, the lidar may scan the detection area in any one of a line-scanning linereceiving manner, a line-scanning area-receiving manner, an area-scanning area-receiving manner, or the like.

During specific implementation, a specific type of the detector includes but is not limited to an avalanche photodiode (Avalanche Photodiode, APD) array, a single-photon avalanche diode (Single-Photon Avalanche Diode, SPAD) array, a charge-coupled device (Charge-coupled Device, CCD) array, a complementary metal-oxide semiconductor (Complementary Metal-Oxide Semiconductor, CMOS) sensor array, or the like.

During specific implementation, the receiving module may include a plurality of independent receiving channels. The receiving channels are in a one-to-one correspondence with the transmitting channels, or a plurality of receiving channels correspond to one transmitting channel. Each receiving channel is configured to receive an echo signal corresponding to a transmit signal of a corresponding transmitting channel.

3. The processing apparatus may receive and analyze an electrical signal output by the receiving module, to generate point cloud data. Optionally, the processing apparatus may further determine feature information of a target based on the point cloud data. The feature information of the target includes but is not limited to a distance, an orientation, a height, a speed, a posture, a size, a shape, or the like of the target.

4. The control apparatus has a signal control capability. For example, the control apparatus may be connected to another component in the lidar through a controller area network (controller area network, CAN) bus or in another manner, and send a control instruction to the another component to coordinate work of the another component. For example, the control apparatus may control the transmitting module to transmit a detection signal; control the receiving module to receive an echo signal, and control the receiving module to process the received detection signal to output an electrical signal; and control the processing apparatus to analyze an electrical signal output by each receiving module to generate point cloud data.

In a specific implementation process, the control apparatus and the processing apparatus may be integrated into one component for implementation, or may be separately implemented in a plurality of components.

For example, the apparatuses may be integrated into one component for implementation. The component may be specifically an integrated circuit chip, for example, may be a general-purpose processor, may be a field programmable gate array (field programmable gate array, FPGA), may be an application-specific integrated chip (application-specific integrated circuit, ASIC), may be a system on chip (system on chip, SoC), may be a network processor (network processor, NP), may be a digital signal processor (digital signal processor, DSP), may be a micro controller unit (micro controller unit, MCU), may be a programmable controller (programmable logic device, PLD), or may be another programmable logic device, a discrete gate or transistor logic device, a discrete hardware component, or another integrated chip. The device may include a central processing unit (central processing unit, CPU), a neural-network processing unit (neural-network processing unit, NPU), and a graphics processing unit (graphics processing unit, GPU), or may include an application processor (application processor, AP), a modem processor, an image signal processor (image signal processor, ISP), a video codec, a digital signal processor (digital signal processor, DSP), a baseband processor, and/or the like. This is not specifically limited.

FIG. 1B is a diagram of an application scenario of a lidar according to an embodiment of this application. In this example, the lidar is mounted on a vehicle, and therefore is also referred to as a vehicle-mounted lidar. In addition to the vehicle-mounted lidar, the lidar further includes a ship-borne lidar mounted on a ship, an on-board lidar mounted on a machine, and the like. In a possible example, as shown in FIG. 1B, the lidar may be specifically mounted at a head position of the vehicle. In a traveling process of the vehicle, the lidar may send a detection signal (which is specifically a laser signal). After irradiating an object in front of the vehicle, the detection signal is reflected by the object, and a reflected detection signal (namely, an echo signal) may be received by the lidar. Further, the lidar may determine, based on the reflected detection signal, information about the obstacle in front of the vehicle, for example, a distance, an orientation, a height, a speed, a posture, a size, or a shape of the obstacle, so that the obstacle information is used to implement a driving function of the vehicle, for example, including but not limited to autonomous driving or assisted driving.

It should be noted that, in the example provided in FIG. 1B, an example in which the lidar is mounted at the head position of the vehicle is used. However, this is not limited in practice. The lidar may alternatively be mounted at another position, for example, a vehicle rear or a vehicle roof.

Based on a transceiver architecture of the lidar, the lidar may be classified into a plurality of types such as point emission and point reception, line emission and line reception, area emission and area reception, and line emission and area reception. A lidar with a multi-point transceiver architecture, like line emission and line reception, area emission and area reception, or line emission and area reception, has a crosstalk problem. Specifically, when some detection units of the lidar detect a high-reflectivity area, a strong or weak response is generated by adjacent units or even all units of the entire device. In terms of output point cloud, point cloud corresponding to the high-reflectivity area "expands" and intrudes into an adjacent area, causing distortion of point cloud in the adjacent area. In this case, the lidar also obtains, through measurement in the adjacent area, a distance value that is the same as or similar to that of a high-reflectivity object. The point cloud that expands from the high-reflectivity object to the adjacent area is referred to as a "crosstalk point" or "crosstalk."

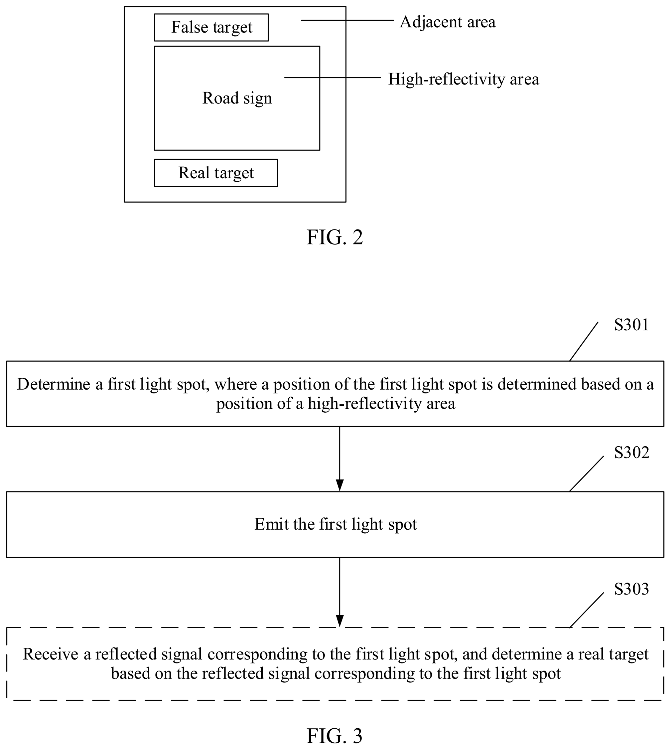

An in-vehicle scene is used as an example. As shown in FIG. 2, a road sign is a high-reflectivity area, and point cloud in the road sign area intrudes into an adjacent area around the road sign. If a vehicle-mounted lidar misses filtering out crosstalk points around the road sign, these missed crosstalk points are easily misidentified as targets with low reflectivity (namely, "false targets"), causing a vehicle to brake abruptly. If the vehicle-mounted lidar excessively filters out crosstalk points around the road sign, a real target with a low reflectivity (referred to as a "real target" or a "low reflectivity target") around the road sign may be filtered out by mistake, resulting in missing target detection, for example, black vehicles and pedestrians near the road sign are filtered out by mistake. This poses safety risks. It should be understood that positions, sizes, shapes, and the like of the real target and the false target shown in FIG. 2 are merely examples, and may be other positions, sizes, shapes, and the like in practice.

It can be learned that accurately identifying a crosstalk point and accurately filtering out the crosstalk point are of great significance to target identification.

The following describes some crosstalk identification and filtering solutions.

In an implementation solution, an additional detector may be disposed on a receiving detector of the lidar or a second receiving range may be set to evaluate information about a crosstalk amount. This further identifies and filters out a crosstalk point. However, in this solution, the detector needs to be specially designed or some detector channels need to be lost.

In another implementation solution, different channels of the detector are isolated from each other by light of different wavelengths or frequencies, to reduce inter-channel crosstalk. However, this solution is difficult to implement and has high costs.

In another implementation solution, different multi-pulse codes are used for different channels of the detector, and whether an echo belongs to the channel is identified based on a code difference, to identify a crosstalk point. However, in this solution, complexity of transmit power and transmit modulation is increased, implementation costs are high, and a data processing procedure of an echo is complex.

In another implementation solution, a spacing between receiving channels that work simultaneously is increased, to improve channel isolation, so as to reduce crosstalk impact. This solution is widely used in a receiving architecture like an avalanche photodiode (avalanche photodiode, APD) or a silicon photomultiplier (silicon photomultiplier, SIPM). If the solution is used in a single-photon avalanche diode (single-photon avalanche diode, SPAD) receiving architecture, time costs for implementation are high due to a time margin problem, and an equivalent line quantity or resolution of the point cloud is significantly affected.

To resolve the foregoing one or more technical problems, technical solutions of this application are provided. In this application, a lighting policy and a target decision policy of the lidar are mainly adjusted based on whether there is a high-reflectivity area in a detection field of view of the lidar or a position of the high-reflectivity area.

FIG. 3 is a flowchart of a transmission method according to an embodiment of this application. That the method is applied to the lidar shown in FIG. 1A is used as an example. The method includes S301 and S302.

S301: Determine a first light spot, where a position of the first light spot is determined based on a position of a high-reflectivity area.

Specifically, the lidar may determine the first light spot based on the position of the high-reflectivity area, for example, determine a shape, a size, and a position of the first light spot.

The first light spot may be a light spot emitted by the lidar in a unit time, or may be a light spot formed by light spots emitted by the lidar in a period of time (for example, a plurality of consecutive unit times). This is not limited in this application. The unit time may be duration of one time of scanning by the lidar, for example, a time of flight (time of flight, ToF). Further, the first light spot may be a linear light spot, a planar light spot, or the like. This is not limited in this application.

Before determining the first light spot based on the position of the high-reflectivity area, the lidar needs to first determine the position of the high-reflectivity area.

In a possible implementation, the lidar may determine the position of the high-reflectivity area based on point cloud data (referred to as "historical point cloud data") previously obtained by the lidar. For example, a transmitting module of the lidar emits a third light spot, and a receiving module of the lidar receives a reflected signal corresponding to the third light spot, and converts the reflected signal into an electrical signal. Then, a processing apparatus converts the electrical signal into point cloud data, and transmits the point cloud data to a control apparatus, and the control apparatus analyzes the point cloud data to obtain the position of the high-reflectivity area.

In another possible implementation, the lidar may determine the position of the high-reflectivity area based on indication information sent by another device or component. For example, after determining the position of the high-reflectivity area, another sensor (for example, a camera or a millimeter-wave radar) or another controller (for example, an intelligent driving domain controller or a mobile data center (mobile data center, MDC)) delivers the indication information to the lidar, to indicate the position of the high-reflectivity area.

Certainly, the foregoing two implementations are merely examples. In practice, the lidar may alternatively determine the position of the high-reflectivity area in another manner.

The following describes a pattern of the first light spot.

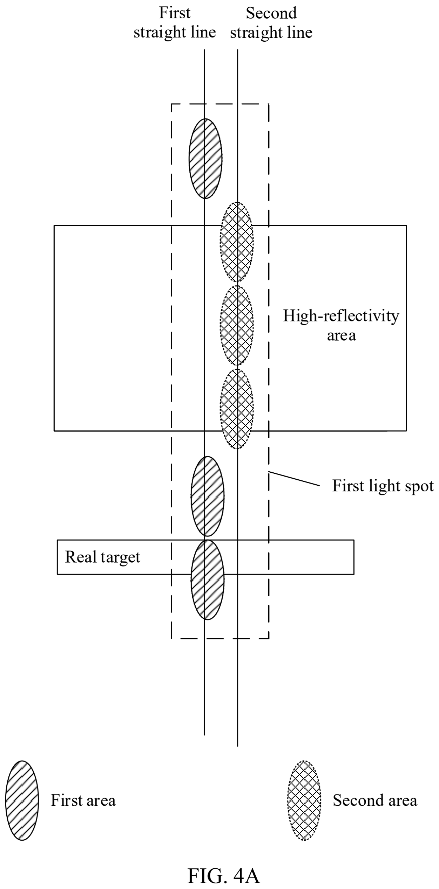

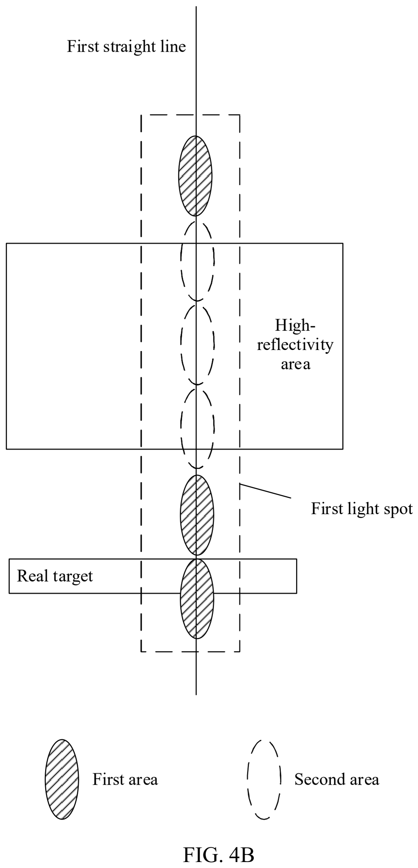

As shown in FIG. 4A or FIG. 4B, the first light spot includes a first area and a second area. The first area is a lighting area, the first area is located on a first straight line, the first straight line overlaps the high-reflectivity area, and the first area is located outside the high-reflectivity area.

During specific implementation, the first area may be the lighting area by shutting down or starting up the transmitting channel of the transmitting module of the lidar. For example, the form of the detection signal sent by the transmitting module is also a linear light spot. The transmitting module includes M+N transmitting channels arranged in a linear shape, where M and N are positive integers. Lighting may be controlled to be enabled on the M transmitting channels corresponding to the first area, and lighting is implemented on the first area.

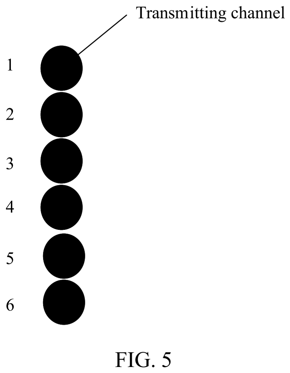

For a specific example, refer to FIG. 5. In FIG. 5, an example in which a quantity of transmitting channels is 6 is used. This is not limited thereto in practice. With reference to the first area shown in FIG. 4A or FIG. 4B, the first area may correspond to channels 1, 5, and 6 in FIG. 5.

The second area includes the following two forms.

Form 1: The second area is a lighting area. As shown in FIG. 4A, the second area is located on a second straight line, the second straight line overlaps the high-reflectivity area, the second area overlaps the high-reflectivity area, and the second straight line does not overlap the first straight line.

That the second area overlaps the high-reflectivity area may be that the second area covers the high-reflectivity area in a direction. For example, refer to FIG. 4A. An example in which the lidar emits a linear spot is used. A scanning direction of the lidar is a transverse direction, and the second area is slightly greater than the high-reflectivity area in a longitudinal direction (actually, the second area may be exactly equal to the high-reflectivity area in the longitudinal direction).

During specific implementation, lighting may be enabled on the second area by shutting down or starting up the transmitting channel of the transmitting module of the lidar. For example, N transmitting channels corresponding to the second area are started up for lighting. The transmitting channel shown in FIG. 5 is still used as an example. With reference to the second area shown in FIG. 4A, the N transmitting channels corresponding to the second area may be channels 2, 3, and 4 in FIG. 5.

Further, during specific implementation, when emitting a light spot, the transmitting module of the lidar performs scanning in a detection field of view (that is, lighting is sequentially performed at different positions in the detection field of view). A lighting time of the second area may be controlled to be different from a lighting time of the first area, so that the second straight line and the first straight line are at different positions in the field of view, and the first straight line and the second straight line do not overlap. For example, the lighting time of the second area may be later than or earlier than the lighting time of the first area, or lighting enabling times and lighting disabling times of the M transmitting channels corresponding to the first area are earlier than or later than lighting enabling times and lighting disabling times of the N transmitting channels corresponding to the second area.

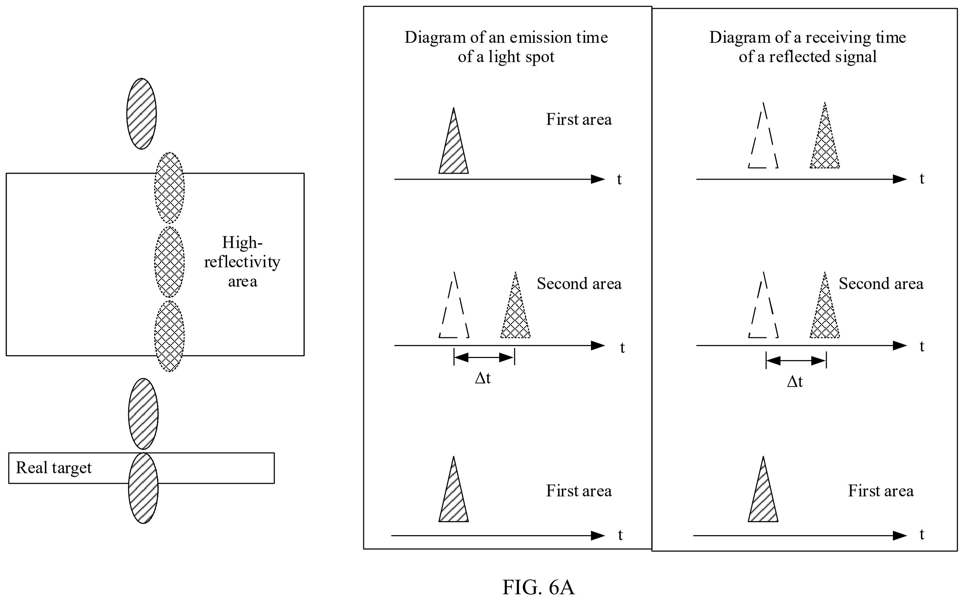

For example, refer to a diagram of an emission time of a light spot in FIG. 6A. The lighting time of the second area is delayed by duration of Δt compared with the lighting time of the first area, so that the first light spot shown in FIG. 4A can be implemented. A dashed line in FIG. 6A indicates that lighting is not performed.

Form 2: The second area is a non-lighting area. The second area is located on the first straight line, and the second area overlaps the high-reflectivity area.

That the second area overlaps the high-reflectivity area may be that the second area covers the high-reflectivity area in a direction. For example, refer to FIG. 4B. An example in which the lidar emits a linear spot is used. A scanning direction of the lidar is a transverse direction, and the second area is slightly greater than the high-reflectivity area in a longitudinal direction (actually, the second area may be exactly equal to the high-reflectivity area in the longitudinal direction).

During specific implementation, the second area may be the non-lighting area by shutting down or starting up the transmitting channel of the transmitting module of the lidar. For example, the N transmitting channels corresponding to the second area are shut down. The transmitting channel shown in FIG. 5 is still used as an example. With reference to the second area shown in FIG. 4B, the N transmitting channels corresponding to the second area may be channels 2, 3, and 4 in FIG. 5.

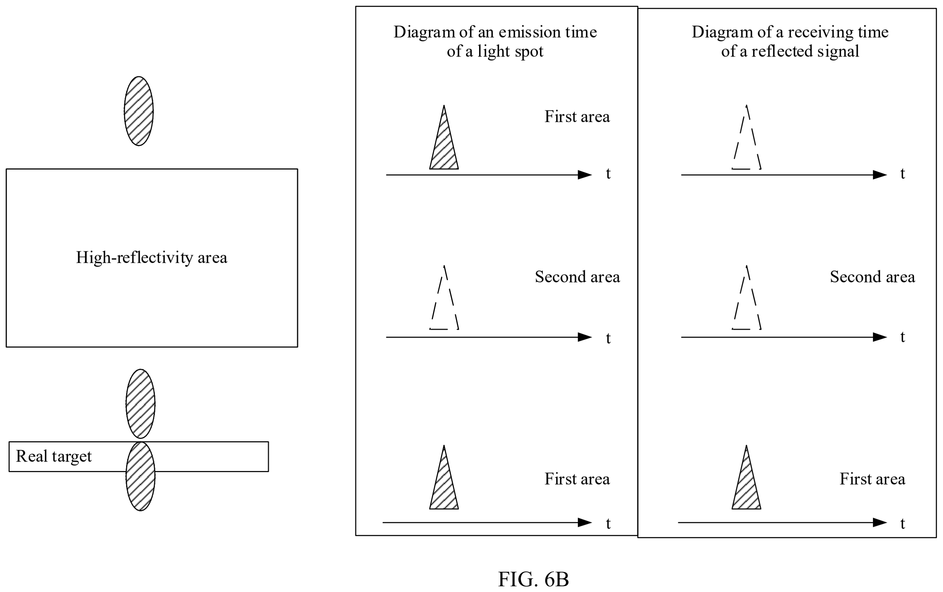

For example, refer to a diagram of an emission time of a light spot in FIG. 6B. A dashed line in FIG. 6B indicates that lighting is not performed, that is, lighting is not performed on the second area.

It should be understood that sizes, positions, and the like of the first area and the second area shown in FIG. 4A, FIG. 4B, FIG. 6A, and FIG. 6B are merely examples rather than limitations. Light spots of different styles in FIG. 4A, FIG. 4B, FIG. 6A, and FIG. 6B are merely for ease of understanding and distinguishing between different areas, and do not represent actual light spot styles.

S302: Emit the first light spot.

For example, after determining the first light spot, the lidar controls, based on the first light spot (for example, a size, a position, or a shape of the first light spot), each channel of the transmitting module to be in a started-up or shut-down state, to emit the first light spot to the outside.

For example, the transmitting channel shown in FIG. 5 is used as an example. A scanning direction of the lidar in the field of view is a horizontal direction from left to right. The control apparatus of the lidar may first control the channels 1, 5, and 6 to enable lighting, after lighting is disabled on the channels 1, 5, and 6, lighting is enabled on the channels 2, 3, and 4, so that the first light spot shown in FIG. 4A can be emitted. Alternatively, the control apparatus may control the channels 1, 5, and 6 to enable lighting, and simultaneously control the channels 2, 3, and 4 to disable lighting, so that the first light spot shown in FIG. 4B can be emitted.

In the foregoing solution, the lidar determines the first light spot based on the position of the high-reflectivity area, to stagger the lighting time of the high-reflectivity area and a lighting time of an adjacent area. This can reduce or even avoid crosstalk caused by the high-reflectivity area to the adjacent area when the lidar detects the adjacent area, and help improve accuracy of detecting a target in the adjacent area by the lidar. In addition, in this solution, only a lighting policy of the transmitting module of the lidar needs to be changed. Compared with a method in which a receiving detector is additionally disposed to measure a crosstalk point, improve isolation between channels of the lidar, or identify crosstalk noise through channel coding, this solution can reduce implementation difficulty, and can reduce design costs.

Optionally, Form 2 of the second area may be further replaced with: The second area is a lighting area, but energy density of a light spot in the second area is less than energy density of a light spot in the first area (in specific implementation, the energy density of the light spot may be reduced by reducing transmit power of laser light. For example, transmit power of the laser light corresponding to the second area is less than or equal to 10% of transmit power of the laser light corresponding to the first area), the second area is located on the first straight line, and the second area overlaps the high-reflectivity area. Because the energy density of the light spot in the second area is small, effect of reducing crosstalk from the second area to the first area can also be achieved.

Optionally, after emitting the first light spot, the lidar may further perform the following: S303: Receive a reflected signal corresponding to the first light spot; and determine a real target based on the reflected signal corresponding to the first light spot. For example, the lidar determines the real target (for example, determines a position of the real target) based on a reflection position of the reflected signal corresponding to the first light spot in the first area.

During specific implementation, the receiving module of the lidar receives the reflected signal corresponding to the first light spot, converts the reflected signal into an electrical signal, and transmits the electrical signal to the processing apparatus. The processing apparatus obtains point cloud data based on the electrical signal, and transmits the point cloud data to the control apparatus. The control apparatus analyzes the point cloud data, and may determine whether there is a real target, and when there is a real target, feature information (for example, one or more of a distance, an orientation, a height, a speed, a posture, a size, or a shape) of the real target is further determined.

For example, as shown in FIG. 6A, lighting is simultaneously performed on upper and lower adjacent areas of the high-reflectivity area, and lighting on the high-reflectivity area is delayed. In the received reflected signals, the reflected signal of the upper adjacent area and the reflected signal of the high-reflectivity area are synchronously returned, and the reflected signal of the lower adjacent area is returned earlier than the reflected signals of the upper adjacent area and the high-reflectivity area. Therefore, it can be determined that there is no real target in the upper adjacent area, but there is a real target in the lower adjacent area.

For example, as shown in FIG. 6B, lighting is simultaneously performed on upper and lower adjacent areas of the high-reflectivity area, and lighting is not performed on the high-reflectivity area. In the received reflected signals, only the lower adjacent area has the reflected signal, and neither the upper adjacent area nor the high-reflectivity area returns the reflected signal. Therefore, it can be determined that there is no real target in the upper adjacent area, but there is a real target in the lower adjacent area.

In this manner, the lidar can accurately identify a real target in an adjacent area of the high-reflectivity area.

It may be understood that the foregoing describes only a process in which the lidar emits a light spot once. In practice, the lidar may emit a light spot a plurality of times, and perform target decision based on reflected signals of the light spot emitted a plurality of times, to further improve accuracy of target identification. Further, in different emission processes, when the first light spot shown in FIG. 4A is used, a delayed lighting time or an advance lighting time (namely, Δt) of the high-reflectivity area relative to the adjacent area may be the same or different.

In a possible design, the lidar further emits a second light spot; receives a reflected signal corresponding to the second light spot; and determines a false target based on the reflected signal corresponding to the first light spot and the reflected signal corresponding to the second light spot. The second light spot may be sent before or after the first light spot. This is not limited.

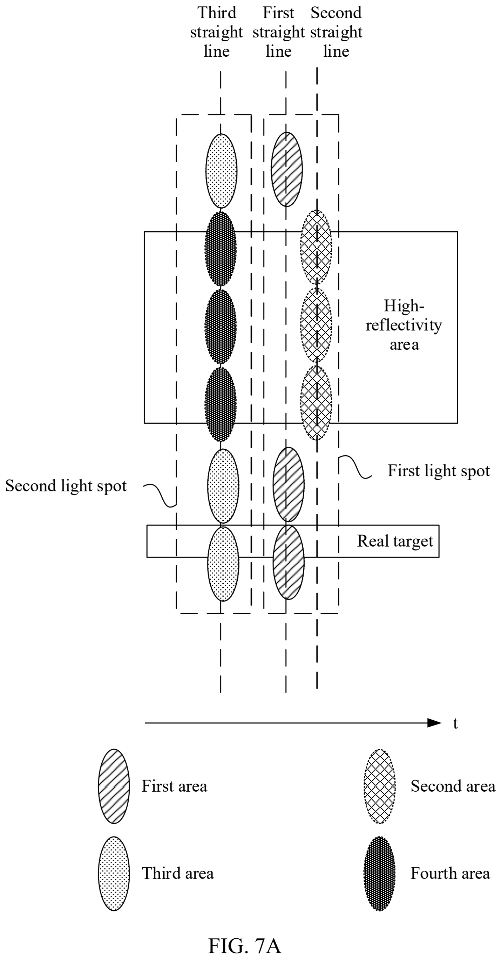

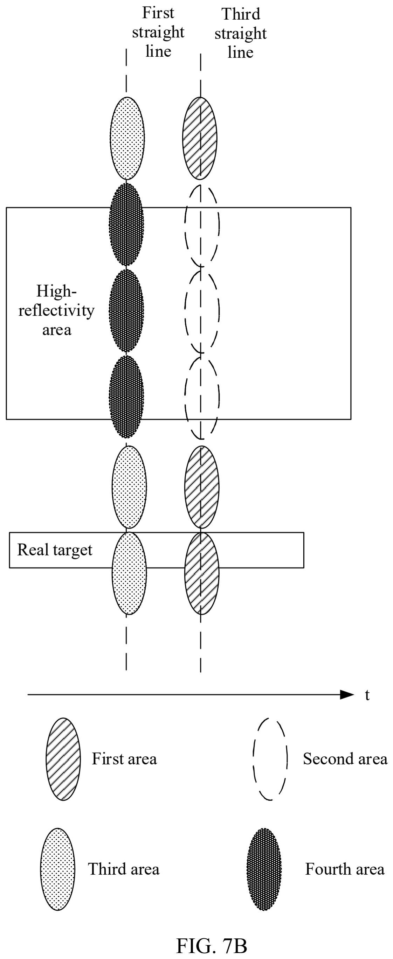

As shown in FIG. 7A or FIG. 7B, the second light spot includes a third area and a fourth area, both the third area and the fourth area are lighting areas, both the third area and the fourth area are located on a third straight line, and/or a lighting time of the third area is the same as a lighting time of the fourth area, the third straight line overlaps the high-reflectivity area, the third area is located outside the high-reflectivity area, and the fourth area overlaps the high-reflectivity area. During specific implementation, the lidar may control the transmitting channel of the transmitting module to be shut down or started up, so that both the third area and the fourth area are lighting areas. For example, M transmitting channels corresponding to the third area and N transmitting channels corresponding to the second area are all start up for lighting.

During specific implementation, the lidar may control a lighting time of the third area to be the same as a lighting time of the fourth area, so that both the third area and the fourth area are located on the third straight line. The transmitting channel shown in FIG. 5 is used as an example. With reference to the third area and the fourth area shown in FIG. 7A or FIG. 7B, the M transmitting channels corresponding to the third area may be the channels 1, 5, and 6 in FIG. 5. The N transmitting channels corresponding to the fourth area may be the channels 2, 3, and 4 in FIG. 5. Lighting is enabled and disabled at the same time on the channels 1, 2, 3, 4, 5, and 6 in FIG. 5, so that lighting can be simultaneously performed on the third area and the fourth area on the third straight line.

Optionally, the first light spot and the second light spot may be light spots emitted by a same transmitting channel of the lidar at different times. For example, the lidar emits the first light spot in a first time period, and emits the second light spot in a second time period, the first time period and the second time period are two different ToFs.

For example, a scanning direction of the lidar in the field of view is a horizontal direction from left to right. In the first time period, the control apparatus of the lidar may first control the channels 1, 5, and 6 to enable lighting, after the channels 1, 5, and 6 are shut down, the channels 2, 3, and 4 are controlled to be started up. In the second time period, the control apparatus of the lidar may control the channels 1, 2, 3, 4, 5, and 6 to be started up. In this way, the first light spot and the second light spot shown in FIG. 7A can be emitted.

For example, a scanning direction of the lidar in the field of view is a horizontal direction from left to right. In the first time period, the control apparatus of the lidar may first control the channels 1, 5, and 6 to enable lighting. In the second time period, the control apparatus of the lidar may control the channels 1, 2, 3, 4, 5, and 6 to be started up, so that the first light spot and the second light spot shown in FIG. 7B can be emitted.

Optionally, a relative position of the lighting time of the first area in the first time period is the same as a relative position of the lighting time of the third area in the second time period. In other words, lighting policies of parts of the first light spot and the second light spot outside the high-reflectivity area are the same. For example, both the first time period and the second time period have duration of 1s, the lighting time of the first area is 0.1s to 0.3s within 1s, and the lighting time of the third area is 0.1s to 0.3s within 2s. In this way, lighting complexity can be reduced.

Optionally, the second area is a lighting area, and a relative position of the lighting time of the second area in the first time period is different from a relative position of the lighting time of the fourth area in the second time period. In this way, lighting policies of parts of the first light spot and the second light spot in the high-reflectivity area can be different. For example, both the first time period and the second time period have duration of 1s, the lighting time of the second area is 0.6s to 0.8s within 1s, and the lighting time of the fourth area is 0.1s to 0.3s within 2s. In this way, it can be ensured that the lidar can determine the false target based on the reflected signal corresponding to the first light spot and the reflected signal corresponding to the second light spot.

Optionally, a specific implementation of determining the false target based on the reflected signal corresponding to the first light spot and the reflected signal corresponding to the second light spot may include: determining, from the first area based on the reflected signal corresponding to the first light spot and the reflected signal corresponding to the second light spot, a target that returns a reflected signal in synchronization with that in the second area, where the target that returns the reflected signal in the first area in synchronization with that in the second area is the false target.

Because point cloud in the high-reflectivity area and a crosstalk point in an adjacent area synchronously exist and disappear, the target that returns the reflected signal in synchronization with that in the second area may be determined from the first area by comparing the first light spot and the second light spot. Such a target is the false target.

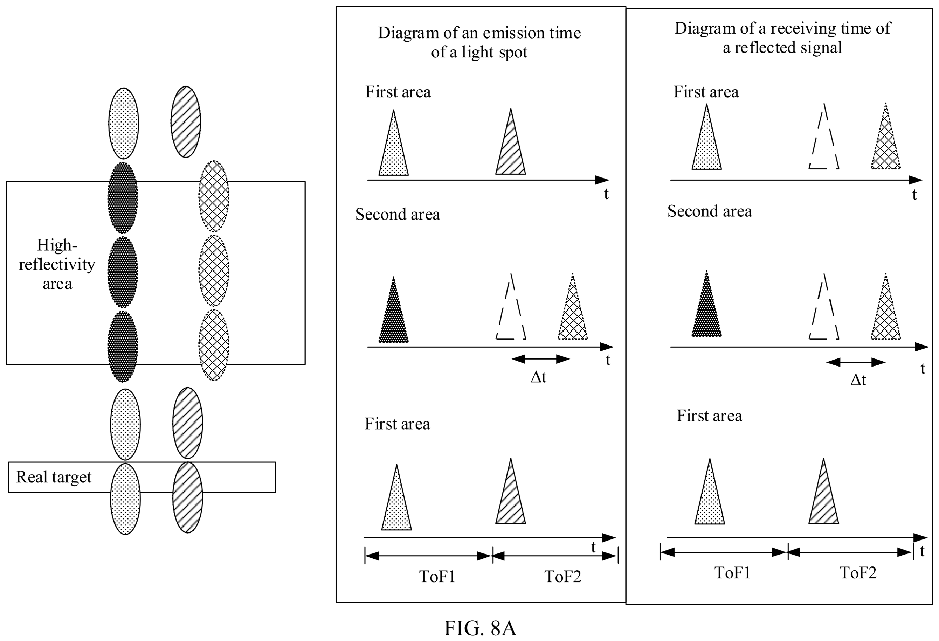

For example, as shown in FIG. 8A, a lighting policy of a ToF1 is as follows: Lighting is simultaneously performed on the high-reflectivity area (namely, the second area) and upper and lower adjacent areas (namely, the first area). In other words, the lidar in the ToF1 emits the second light spot. A lighting policy of a ToF2 is as follows: Lighting is simultaneously performed on the upper and lower adjacent areas, and lighting is delayed on the high-reflectivity area. In other words, the lidar in the ToF2 emits the first light spot. A receiving status of a reflected signal of the ToF1 is that reflected signals in the upper and lower adjacent areas and a reflected signal in the high-reflectivity area are synchronously returned. A receiving status of a reflected signal of the ToF2 is that a reflected signal in the upper adjacent area and a reflected signal in the high-reflectivity area are synchronously returned, and a reflected signal in the lower adjacent area is returned earlier than the reflected signal in the upper adjacent area and the reflected signal in the high-reflectivity area. A real target and a false target may be determined by comparing receiving statuses of ToF1 and ToF2. When lighting is performed on the high-reflectivity area and the adjacent area at the same time (ToF1), there are reflected signals in both the high-reflectivity area and the upper and lower adjacent areas, and it may be preliminarily determined that a target may exist in both the upper and lower adjacent areas. When lighting is performed on the high-reflectivity area and the adjacent area at different times (ToF2), and a reflected signal is returned in the lower adjacent area, no reflected signal is returned in the upper adjacent area and the high-reflectivity area, a return time of the reflected signal in the upper adjacent area is synchronous with a return time of the reflected signal in the high-reflectivity area. It may be determined that a target in the lower adjacent area is a real target, and that a target in the upper adjacent area is a false target caused by crosstalk in the high-reflectivity area.

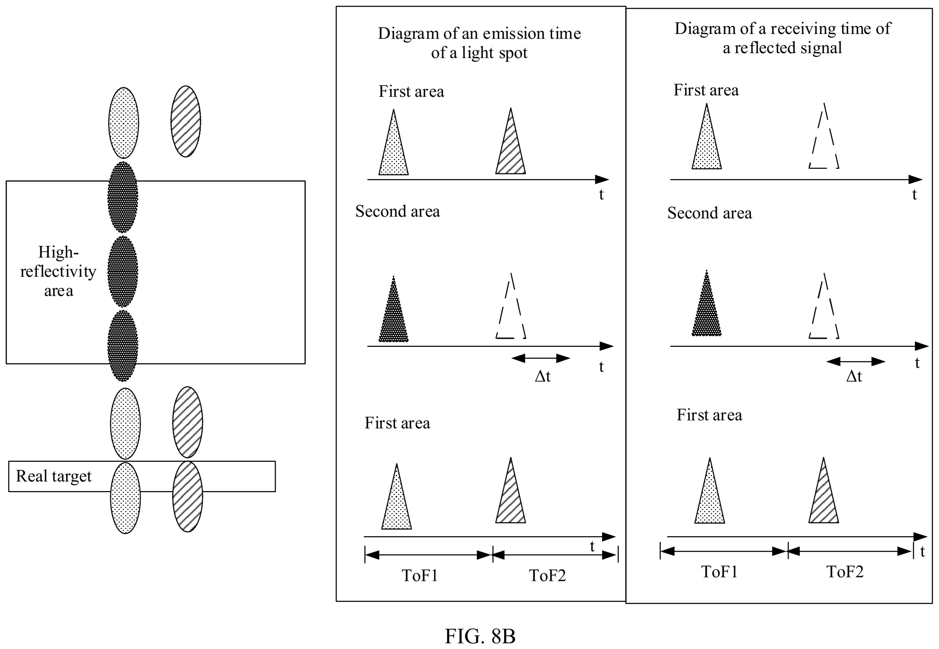

For example, as shown in FIG. 8B, a lighting policy of the ToF1 is as follows: Lighting is simultaneously performed on the high-reflectivity area and the upper and lower adjacent areas, that is, the lidar in the ToF1 emits the second light spot. A lighting policy of the ToF2 is as follows: Lighting is performed on upper and lower adjacent areas of the high-reflectivity area, and lighting is not performed on the high-reflectivity area. In other words, the lidar in ToF2 emits the first light spot. A receiving status of a reflected signal of the ToF 1 is that a reflected signal in the upper adjacent area and a reflected signal in the high-reflectivity area are synchronously returned. A receiving status of a reflected signal of the ToF2 is that a reflected signal in the upper adjacent area and a reflected signal in the high-reflectivity area do not exist, and a reflected signal exists in the lower adjacent area. A real target and a false target may be determined by comparing receiving statuses of the ToF1 and ToF2. When light is performed on both the high-reflectivity area and the adjacent area (ToF1), there are reflected signals in both the high-reflectivity area and the upper and lower adjacent areas, and it may be preliminarily determined that a target may exist in both the upper and lower adjacent areas. When light is performed on the high-reflectivity area but is not performed on the adjacent area (ToF2), only the lower adjacent area returns a reflected signal. Therefore, a target in the lower adjacent area is a real target, and a target in the upper adjacent area is a false target caused by crosstalk in the high-reflectivity area.

In the foregoing design, the lidar emits two different light spots and compares reflected signals of the two different light spots, so that the false target and the real target in an adjacent area can be distinguished. This further improves accuracy of target identification.

Optionally, when there is no high-reflectivity area in a detection field of view of the lidar, the lidar may control the transmitting module to scan the detection field of view by using the first light spot, to ensure comprehensive detection of the detection field of view. When there is a high-reflectivity area in the detection field of view of the lidar, the lidar may control the transmitting module to switch a lighting policy, and alternately scan the high-reflectivity area and an adjacent area of the high-reflectivity area in the detection field of view by using the first light spot and the second light spot, so as to accurately identify real and false targets (crosstalk).

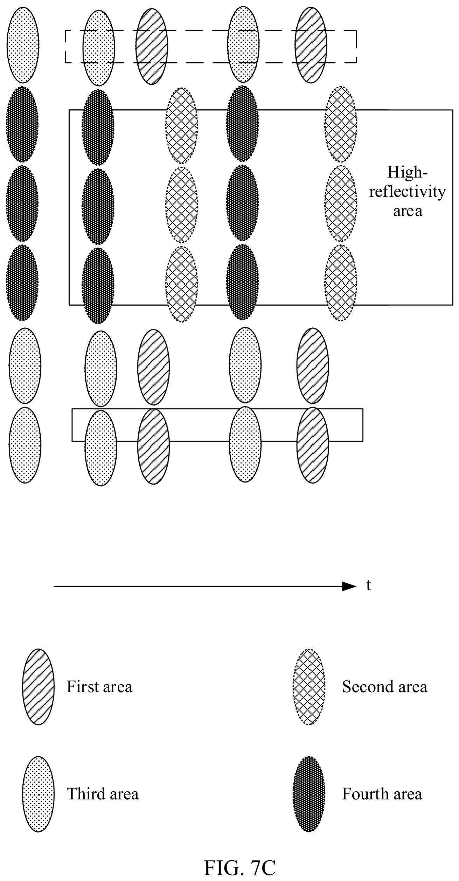

For example, as shown in FIG. 7C, the lidar first scans the detection field of view by using the second light spot shown in FIG. 7A. When scanning the high-reflectivity area, the lidar detects at least one target, but cannot distinguish whether these targets are real targets or false targets. Therefore, the first light spot and the second light spot shown in FIG. 7A are alternately scanned in the high-reflectivity area, and a real target and a false target may be distinguished by comparing reflected signals of the first light spot and the second light spot (for a distinguishing method, refer to related descriptions in FIG. 8A, and details are not described herein again).

It may be understood that, in FIG. 7C, an example in which one first light spot and one second light spot alternate is used. In practice, alternatively, a plurality of first light spots and one second light spot may alternate, one first light spot and a plurality of second light spots may alternate, a plurality of first light spots and a plurality of second light spots may alternate, or the like. This is not limited in this application.

In addition, a type of light spot in the high-reflectivity area is not limited to alternation of two types of light spot, and there may be alternation of more types of light spot.

Further, optionally, after identifying the false target, the lidar may filter out the false target, and output the real target.

It may be understood that, in the foregoing example, the lidar performs scanning in a transverse field of view direction (scanning from left to right in any transverse direction). Therefore, the light spots are arranged in a longitudinal field of view (namely, an up-down direction). In practice, the lidar performs scanning in another field of view direction, and the light spots may alternatively be arranged in the another field of view direction. This is not limited in this application.

The foregoing describes the lighting policy and the target decision policy of the lidar mainly adjusted based on whether there is a high-reflectivity area in a detection field of view of the lidar or a position of the high-reflectivity area. An embodiment of this application further provides a solution. Compared with that in the foregoing solution, the lidar does not need to predict whether there is a high-reflectivity area or a position of the high-reflectivity area in the detection field of view, but directly uses a policy of alternately lighting by using different light spots, to identify real objects, false objects, and high-reflectivity areas.

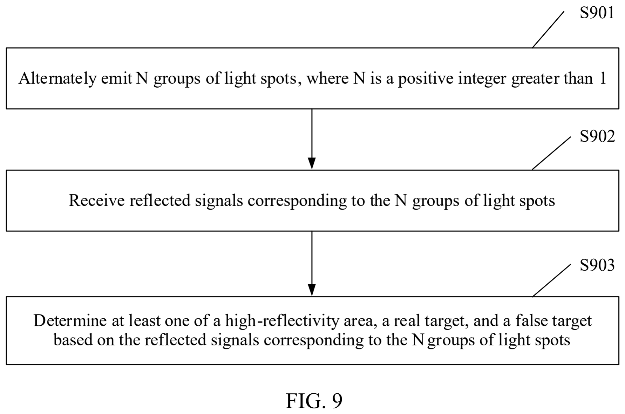

FIG. 9 is a flowchart of a transmission method according to an embodiment of this application. That the method is applied to the lidar shown in FIG. 1A is used as an example. The method includes S901 and S902.

S901: Alternately emit N groups of light spots, where N is a positive integer greater than 1.

Specifically, the transmitting module of the lidar alternately emits the N groups of light spots.

Lighting areas of different light spots in the N groups of light spots are staggered in a first direction, the first direction and a second direction are not in a same straight line, and the second direction is a scanning direction of the lidar. For example, the first direction is perpendicular to the second direction. Specifically, for example, the first direction is a longitudinal field of view direction, and the second direction is a transverse field of view direction; or the second direction is a longitudinal field of view direction, and the first direction is a transverse field of view direction.

That lighting areas of different light spots are staggered in the first direction may be understood as that all lighting areas of different light spots are staggered in the first direction, or that some lighting areas of different light spots are staggered in the first direction. This is not limited.

The following uses an example in which two groups of light spots (a fourth light spot and a fifth light spot) are alternately emitted, the first direction is a longitudinal field of view direction, and the second direction is a transverse field of view direction.

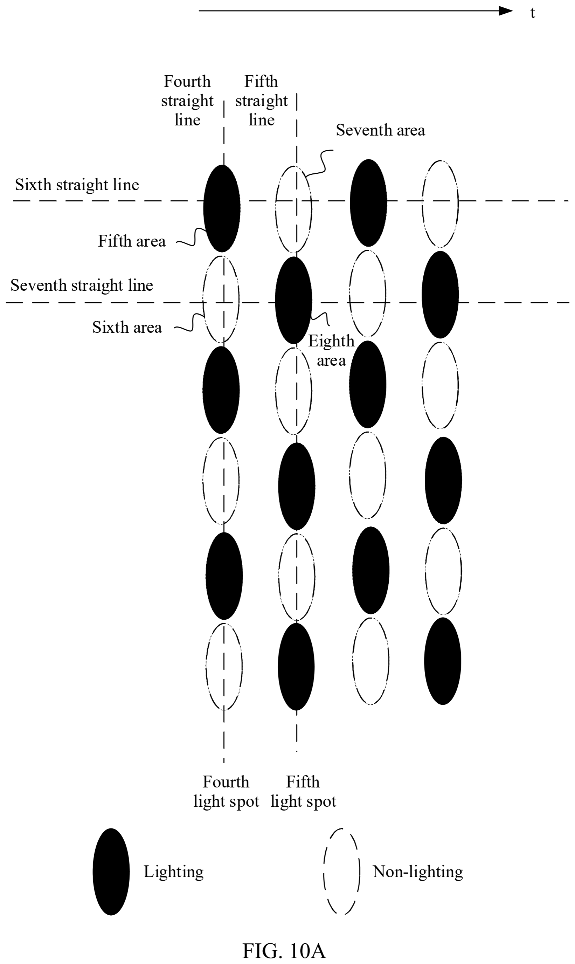

As shown in FIG. 10A, the fourth light spot includes a fifth area and a sixth area, the fifth area is a lighting area, the sixth area is a non-lighting area, and the fifth area and the sixth area are located on a fourth straight line.

The fifth light spot includes a seventh area and an eighth area, the seventh area is a non-lighting area, the eighth area is a lighting area, the seventh area and the eighth area are located on a fifth straight line, and the fourth straight line does not overlap the fifth straight line.

The fifth area and the seventh area are located on a sixth straight line, the sixth area and the eighth area are located on a seventh straight line, the fifth straight line does not overlap the seventh straight line, the sixth straight line intersects the fourth straight line and the fifth straight line, and the seventh straight line intersects the fourth straight line/the fifth straight line.

The fourth straight line and the fifth straight line are located in a longitudinal field of view direction, and the sixth straight line and the seventh straight line are located in a transverse field of view direction.

In a specific implementation, the fifth area and the seventh area correspond to a same transmitting channel, the sixth area and the eighth area correspond to a same transmitting channel, the fifth area and the sixth area correspond to different transmitting channels, and the seventh area and the eighth area correspond to different transmitting channels. In other words, the fifth light spot and the sixth light spot are light spots generated when the lidar uses a same transmitting channel but starts up and/or shuts down different transmitting channels for lighting.

For example, with reference to the transmitting channels shown in FIG. 5, the fifth area and the seventh area may correspond to the channels 1, 3, and 5, and the sixth area and the eighth area may correspond to the channels 2, 4, and 6. The control apparatus of the lidar may first control the channels 1, 3, and 5 to enable lighting and the channels 2, 4, and 6 to disable lighting, to emit the fourth light spot, and then control the channels 1, 3, and 5 to disable lighting and the channels 2, 4, and 6 to enable lighting, to emit the fourth light spot.

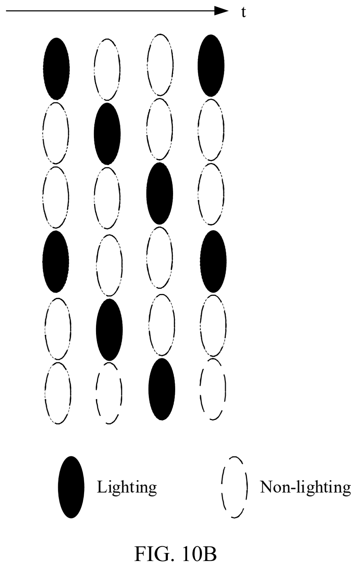

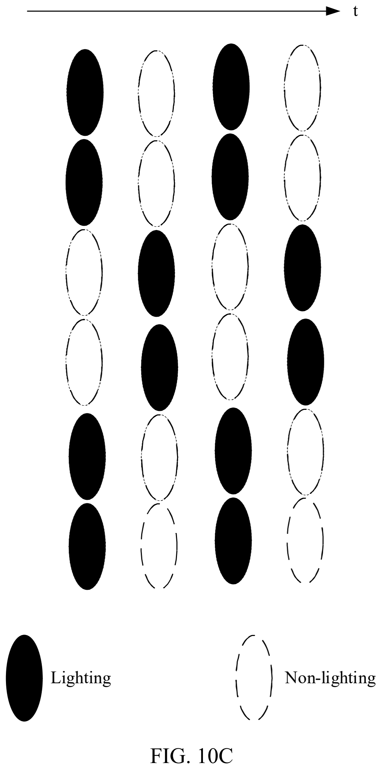

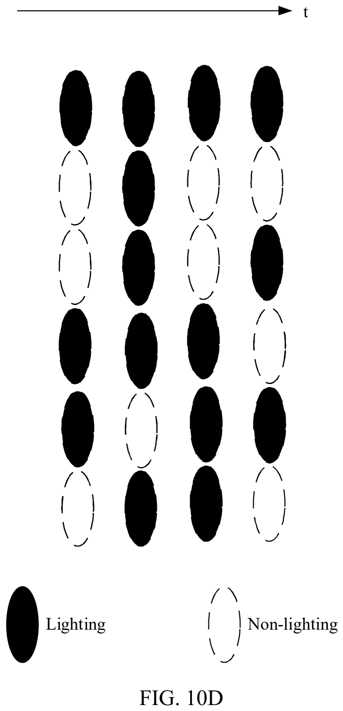

It may be understood that, in FIG. 10A, an example in which alternately lighting is performed by using two groups of light spots and the two groups of light spots are evenly allocated in a two-area proportion is used. This is not limited in practice. For example, alternately lighting may alternatively be performed by using a plurality of groups of light spots. FIG. 10B is a diagram in which alternately lighting is performed by using three groups of light spots. For example, lighting areas may alternatively be evenly allocated in a three-area proportion, a four-area proportion, or an eight-area proportion. FIG. 10C is a diagram of evenly allocating in a three-area proportion. For example, lighting areas may alternatively be allocated in an unequal proportion manner. FIG. 10D is a diagram of randomly and alternately lighting.

In addition, in FIG. 10A to FIG. 10D, an example in which horizontal scanning is performed in a left-to-right direction is used. This is not limited in practice.

S902: Receive reflected signals corresponding to the N groups of light spots.

Specifically, the receiving module of the lidar receives a reflected signal corresponding to the fifth light spot and a reflected signal corresponding to the sixth light spot.

S903: Determine at least one of the high-reflectivity area, the real target, and the false target based on the reflected signals corresponding to the N groups of light spots.

Specifically, the receiving module of the lidar converts a reflected signal corresponding to the fourth light spot and the reflected signal corresponding to the fifth light spot into electrical signals, then the processing apparatus converts the electrical signals into point cloud data and transmits the point cloud data to the control apparatus, and the control apparatus analyzes the point cloud data to identify and determine at least one of the real target, the high-reflectivity area, and the false target.

During specific implementation, the processing apparatus may determine at least one of the real target, the high-reflectivity area, and the false target based on a strength change of the reflected signal.

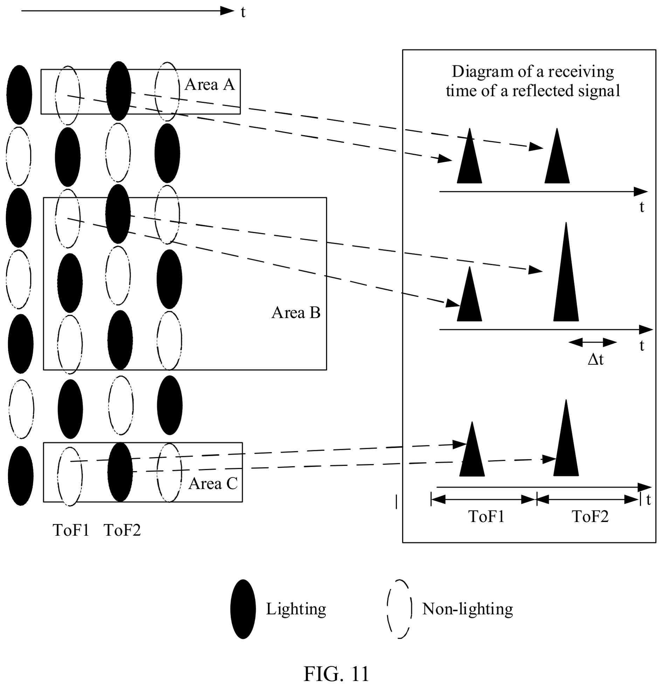

The lighting policy shown in FIG. 10A is used as an example. As shown in FIG. 11, in the ToF1, lighting is not performed on an area A lit, lighting is performed on an area B, and lighting is not performed on an area C. The areas A, B, and C all have reflected signals, and the area B may be the high-reflectivity area. In the ToF2, lighting is performed on the areas A, B, and C, and lighting on the area B in the ToF2 is stronger than lighting on the area B in the ToF1, but received signal strength of the area A remains unchanged (or changes slightly). Therefore, it can be determined that there is a false target in the area A (this is because the false target does not reflect a signal (or a signal reflectivity is very low) regardless of whether lighting is performed on the false target, and a signal received by the lidar in the area is caused by crosstalk in another area. Therefore, a received signal strength change is small). Received signal strength of both the area B and the area C are enhanced, and the received signal strength (or a strength increase) of the area B is obviously higher than the received signal strength (or a strength increase) of the area C. Therefore, it may be determined that the area B is the high-reflectivity area, and the area C is the real target (because the high-reflectivity area has a high reflectivity, the received signal strength of the high-reflectivity area increases more significantly). Certainly, this is merely an example, and a lighting manner and a target determining manner are not limited thereto.

In the foregoing solution, the lidar directly uses a policy of alternately lighting by using different light spots, to identify the real target, the false target, and the high-reflectivity area, and does not need to predict whether there is a high-reflectivity area or a position of the high-reflectivity area in the detection field of view, so that implementation complexity can be reduced.

In a possible design, the lidar may adjust a lighting policy of the transmitting module based on external input information (for example, weather or a position of a high-reflectivity area), for example, adjust a value of N or a quantity of equally allocated areas.

In an alternative design, the lidar may alternatively sequentially scan an entire detection field of view by using each of the N groups of light spots, and determine at least one of the high-reflectivity area, the real target, and the false target based on the reflected signals corresponding to the N groups of light spots.

The light spot shown in FIG. 10A is used as an example. The control apparatus of the lidar first controls the transmitting module to transmit a fourth light spot, performs traversal scanning on an entire scanning field of view by using the fourth light spot, and controls the receiving module to receive a reflected signal of the fourth light spot. Then, the transmitting module is controlled to emit a fifth light spot, and perform traversal scanning on the entire scanning field of view again by using the fifth light spot, and the receiving module is controlled to receive a reflected signal of the fifth light spot. Finally, the processing apparatus determines at least one of the high-reflectivity area, the real target, and the false target based on the reflected signals received during the two scans.

In this way, a frequency of switching the lighting policy by the lidar can be reduced, implementation complexity can be reduced, and energy consumption can be reduced.

The foregoing embodiments may be implemented independently, or may be implemented in combination with each other. This is not limited. For example, with reference to the solutions shown in FIG. 3 and FIG. 9, a light spot scanning shown in FIG. 10A is performed outside the high-reflectivity area, and a light spot scanning shown in FIG. 7A or FIG. 7B is performed when the high-reflectivity area is detected. Certainly, the foregoing is merely a possible combination example, and is not limited thereto in practice.

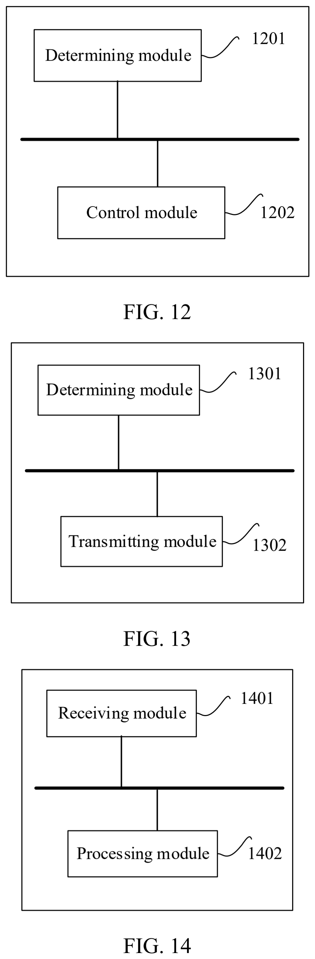

Based on a same technical concept, as shown in FIG. 12, an embodiment of this application further provides a control apparatus, including method steps performed by the control apparatus in the foregoing method embodiments. The apparatus includes:
a determining module 1201, configured to determine a first light spot, where a position of the first light spot is determined based on a position of a high-reflectivity area; and
a control module 1202, configured to control a transmitting module to emit the first light spot.

The first light spot includes a first area and a second area; the first area is a lighting area; the first area is located on a first straight line, the first straight line overlaps the high-reflectivity area, the first area is located outside the high-reflectivity area; and the second area is a non-lighting area, the second area is located on the first straight line, and the second area overlaps the high-reflectivity area; or the second area is a lighting area, the second area is located on a second straight line, the second straight line overlaps the high-reflectivity area, the second area overlaps the high-reflectivity area, the second straight line does not overlap the first straight line, and/or a lighting time of the second area is different from a lighting time of the first area.

It should be understood that all related content of the steps in the foregoing method embodiments may be referenced to function descriptions of corresponding functional modules, and details are not described herein again.

Based on a same technical concept, as shown in FIG. 13, an embodiment of this application further provides a transmitting apparatus. The apparatus includes:
a determining module 1301, configured to determine a first light spot, where a position of the first light spot is determined based on a position of a high-reflectivity area; and
a transmitting module 1302, configured to transmit the first light spot, where the first light spot includes a first area and a second area; the first area is a lighting area; the first area is located on a first straight line, the first straight line overlaps the high-reflectivity area, the first area is located outside the high-reflectivity area; and the second area is a non-lighting area, the second area is located on the first straight line, and the second area overlaps the high-reflectivity area; or the second area is a lighting area, the second area is located on a second straight line, the second straight line overlaps the high-reflectivity area, the second area overlaps the high-reflectivity area, the second straight line does not overlap the first straight line, and/or a lighting time of the second area is different from a lighting time of the first area.

It should be understood that all related content of the steps in the foregoing method embodiments may be referenced to function descriptions of corresponding functional modules, and details are not described herein again.

Based on a same technical concept, as shown in FIG. 14, an embodiment of this application further provides a receiving apparatus. The apparatus includes:
a receiving module 1401, configured to receive a reflected signal corresponding to a first light spot; and
a processing module 1402, configured to determine a real target based on the reflected signal corresponding to the first light spot.

The first light spot includes a first area and a second area; the first area is a lighting area; the first area is located on a first straight line, the first straight line overlaps the high-reflectivity area, the first area is located outside the high-reflectivity area; and the second area is a non-lighting area, the second area is located on the first straight line, and the second area overlaps the high-reflectivity area; or the second area is a lighting area, the second area is located on a second straight line, the second area overlaps the high-reflectivity area, the second area overlaps the high-reflectivity area, the second straight line does not overlap the first straight line, and/or a lighting time of the second area is different from a lighting time of the first area.

It should be understood that all related content of the steps in the foregoing method embodiments may be referenced to function descriptions of corresponding functional modules, and details are not described herein again.

Based on a same technical concept, an embodiment of this application further provides a terminal, including at least one of the foregoing control apparatus, transmitting apparatus, or receiving apparatus. The terminal may be a vehicle, a drone, a helicopter, an airplane, a ship, an intelligent transportation device, a smart home device, or the like.

Based on a same technical concept, an embodiment of this application further provides a computer-readable storage medium. The storage medium stores a computer program or instructions. When the computer program or the instructions are executed by a communication apparatus, the foregoing method steps are implemented.

Based on a same technical concept, an embodiment of this application further provides a computer program product. When the computer program product runs on a processor, the foregoing method steps are implemented.

A person skilled in the art should understand that embodiments of this application may be provided as methods, systems, or computer program products. Therefore, this application may be in a form of a hardware-only embodiment, a software-only embodiment, or an embodiment combining software and hardware aspects. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A transmission method, comprising:
determining a first light spot, wherein a position of the first light spot is determined based on a position of a high-reflectivity area; and
emitting the first light spot, wherein
the first light spot comprises a first area and a second area;
the first area is a lighting area, the first area is located on a first straight line, the first straight line overlaps the high-reflectivity area, and the first area is located outside the high-reflectivity area; and
the second area is a non-lighting area, the second area is located on the first straight line, and the second area overlaps the high-reflectivity area; or the second area is a lighting area, the second area is located on a second straight line, the second straight line overlaps the high-reflectivity area, and the second area overlaps the high-reflectivity area, wherein the second straight line does not overlap the first straight line, and/or a lighting time of the second area is different from a lighting time of the first area.

2. The method according to claim 1, wherein the first area is a lighting area, and lighting is enabled on M transmitting channels corresponding to the first area; and
the second area is a non-lighting area, and lighting is disabled on N transmitting channels corresponding to the second area; or the second area is a lighting area, and lighting times of the N transmitting channels corresponding to the second area are different from lighting times of the M transmitting channels corresponding to the first area.

3. The method according to claim 1 or 2, further comprising:
receiving a reflected signal corresponding to the first light spot; and
determining a real target based on the reflected signal corresponding to the first light spot.

4. The method according to claim 3, wherein determining the real target based on the reflected signal corresponding to the first light spot comprises:
determining the real target based on a reflection position of the reflected signal corresponding to the first light spot in the first area.

5. The method according to any one of claims 1 to 4, further comprising:
emitting a second light spot, wherein
the second light spot comprises a third area and a fourth area, both the third area and the fourth area are lighting areas, both the third area and the fourth area are located on a third straight line, and/or a lighting time of the third area is the same as a lighting time of the fourth area; and the third straight line overlaps the high-reflectivity area, the third area is located outside the high-reflectivity area, and the fourth area overlaps the high-reflectivity area.

6. The method according to claim 5, further comprising:
receiving a reflected signal corresponding to the second light spot; and
determining a false target based on the reflected signal corresponding to the first light spot and the reflected signal corresponding to the second light spot.

7. The method according to claim 6, wherein determining the false target based on the reflected signal corresponding to the first light spot and the reflected signal corresponding to the second light spot comprises:
determining, from the first area based on the reflected signal corresponding to the first light spot and the reflected signal corresponding to the second light spot, a target that returns a reflected signal in synchronization with that in the second area, wherein the target that returns the reflected signal in the first area in synchronization with that in the second area is the false target.

8. The method according to any one of claims 5 to 7, wherein
emitting the first light spot comprises: emitting the first light spot in a first time period; and
emitting the second light spot comprises: emitting the second light spot in a second time period, wherein
the first time period and the second time period are two different times of flight ToFs.

9. The method according to claim 5, wherein a relative position of the lighting time of the first area in the first time period is the same as a relative position of the lighting time of the third area in the second time period.

10. The method according to claim 9, wherein the second area is a lighting area, and a relative position of the lighting time of the second area in the first time period is different from a relative position of the lighting time of the fourth area in the second time period.

11. The method according to any one of claims 1 to 10, further comprising:
emitting a third light spot, receiving a reflected signal corresponding to the third light spot, and determining the position of the high-reflectivity area based on the reflected signal corresponding to the third light spot; or
receiving indication information from a sensor or a controller, and determining the position of the high-reflectivity area based on the indication information.

12. A control method, comprising:
determining a first light spot, wherein a position of the first light spot is determined based on a position of a high-reflectivity area; and
controlling a transmitting module to emit the first light spot, wherein
the first light spot comprises a first area and a second area;
the first area is a lighting area, the first area is located on a first straight line, the first straight line overlaps the high-reflectivity area, and the first area is located outside the high-reflectivity area; and
the second area is a non-lighting area, the second area is located on the first straight line, and the second area overlaps the high-reflectivity area; or the second area is a lighting area, the second area is located on a second straight line, the second area overlaps the high-reflectivity area, and the second area overlaps the high-reflectivity area, wherein the second straight line does not overlap the first straight line, and/or a lighting time of the second area is different from a lighting time of the first area.

13. A transmitting apparatus, wherein the transmitting apparatus comprises a determining module and a transmitting module, the determining module is configured to determine a first light spot, and a position of the first light spot is determined based on a position of a high-reflectivity area; and
the transmitting module is configured to emit the first light spot, wherein
the first light spot comprises a first area and a second area;
the first area is a lighting area, the first area is located on a first straight line, the first straight line overlaps the high-reflectivity area, and the first area is located outside the high-reflectivity area; and
the second area is a non-lighting area, the second area is located on the first straight line, and the second area overlaps the high-reflectivity area; or the second area is a lighting area, the second area is located on a second straight line, the second straight line overlaps the high-reflectivity area, and the second area overlaps the high-reflectivity area, wherein the second straight line does not overlap the first straight line, and/or a lighting time of the second area is different from a lighting time of the first area.

14. The transmitting apparatus according to claim 13, wherein the first area is a lighting area, and lighting is enabled on M transmitting channels corresponding to the first area; and
the second area is a non-lighting area, and lighting is disabled on N transmitting channels corresponding to the second area; or the second area is a lighting area, and lighting times of the N transmitting channels corresponding to the second area are different from lighting times of the M transmitting channels corresponding to the first area.

15. The transmitting apparatus according to claim 13 or 14, wherein the transmitting module is further configured to emit a second light spot, wherein
the second light spot comprises a third area and a fourth area, both the third area and the fourth area are lighting areas, both the third area and the fourth area are located on a third straight line, and/or a lighting time of the third area is the same as a lighting time of the fourth area; and the third straight line overlaps the high-reflectivity area, the third area is located outside the high-reflectivity area, and the fourth area overlaps the high-reflectivity area.

16. The transmitting apparatus according to claim 15, wherein the transmitting module is configured to:
emit the first light spot in a first time period; and
emit the second light spot in a second time period, wherein
the first time period and the second time period are two different times of flight ToFs.

17. The transmitting apparatus according to claim 15, wherein a relative position of the lighting time of the first area in the first time period is the same as a relative position of the lighting time of the third area in the second time period.

18. The transmitting apparatus according to claim 17, wherein the second area is a lighting area, and a relative position of the lighting time of the second area in the first time period is different from a relative position of the lighting time of the fourth area in the second time period.

19. The transmitting apparatus according to any one of claims 13 to 18, wherein the transmitting module is further configured to transmit a third light spot, and the third light spot is used to determine the position of the high-reflectivity area.

20. A receiving apparatus, comprising:
a receiving module, configured to receive a reflected signal corresponding to a first light spot; and
a processing module, configured to determine a real target based on the reflected signal corresponding to the first light spot, wherein
the first light spot comprises a first area and a second area;
the first area is a lighting area, the first area is located on a first straight line, the first straight line overlaps the high-reflectivity area, and the first area is located outside the high-reflectivity area; and
the second area is a non-lighting area, the second area is located on the first straight line, and the second area overlaps the high-reflectivity area; or the second area is a lighting area, the second area is located on a second straight line, the second area overlaps the high-reflectivity area, and the second area overlaps the high-reflectivity area, wherein the second straight line does not overlap the first straight line, and/or a lighting time of the second area is different from a lighting time of the first area.

21. The receiving apparatus according to claim 20, wherein the processing module is configured to:
determine the real target based on a reflection position of the reflected signal corresponding to the first light spot in the first area.

22. The receiving apparatus according to claim 20 or 21, wherein
the receiving module is further configured to receive a reflected signal corresponding to a second light spot;
the processing module is further configured to determine a false target based on the reflected signal corresponding to the first light spot and the reflected signal corresponding to the second light spot; and
the second light spot comprises a third area and a fourth area, both the third area and the fourth area are lighting areas, both the third area and the fourth area are located on a third straight line, and/or a lighting time of the third area is the same as a lighting time of the fourth area; and the third straight line overlaps the high-reflectivity area, the third area is located outside the high-reflectivity area, and the fourth area overlaps the high-reflectivity area.

23. The receiving apparatus according to claim 22, wherein the processing apparatus is configured to:
determine, from the first area based on the reflected signal corresponding to the first light spot and the reflected signal corresponding to the second light spot, a target that returns a reflected signal in synchronization with that in the second area, wherein the target that returns the reflected signal in the first area in synchronization with that in the second area is the false target.

24. The receiving apparatus according to any one of claims 20 to 23, wherein
the receiving module is further configured to receive a reflected signal corresponding to a third light spot, and the processing module is further configured to determine a position of the high-reflectivity area based on the reflected signal corresponding to the third light spot; or
the processing module is further configured to determine a position of the high-reflectivity area based on indication information from a sensor or a controller.

25. A control apparatus, comprising:
a determining module, configured to determine a first light spot, wherein a position of the first light spot is determined based on a position of a high-reflectivity area; and
a control module, configured to control a transmitting module to emit the first light spot, wherein
the first light spot comprises a first area and a second area;
the first area is a lighting area, the first area is located on a first straight line, the first straight line overlaps the high-reflectivity area, and the first area is located outside the high-reflectivity area; and
the second area is a non-lighting area, the second area is located on the first straight line, and the second area overlaps the high-reflectivity area; or the second area is a lighting area, the second area is located on a second straight line, the second straight line overlaps the high-reflectivity area, and the second area overlaps the high-reflectivity area, wherein the second straight line does not overlap the first straight line, and/or a lighting time of the second area is different from a lighting time of the first area.

26. A terminal, comprising at least one of the transmitting apparatus according to any one of claims 13 to 19, the receiving apparatus according to any one of claims 20 to 24, or the control apparatus according to claim 25.

27. A computer-readable storage medium, wherein the storage medium stores a computer program or instructions, and when the computer program or instructions are executed by a communication apparatus, the method according to any one of claims 1 to 11 is implemented, or the method according to claim 12 is implemented.
